# EUROPÄISCHE PATENTSCHRIFT

(11) **EP 1 104 728 B1**
(45) Veröffentlichungstag und Bekanntmachung des Hinweises auf die Patenterteilung: **30.08.2006**
(21) Anmeldenummer: 00123468.1
(22) Anmeldetag: 07.11.2000
(51) Int. Cl.: B60R 21/34

(54) **Sicherheitseinrichtung an einem Fahrzeug zum Schutz von Fussgängern**
Vehicle provided with a safety device for the protection of pedestrians
Véhicule équipé d'un dispositif de sécurité protégeant les piétons

(30) Priorität: 01.12.1999 DE 19957870
(43) Veröffentlichungstag der Anmeldung: 06.06.2001
(73) Patentinhaber: Volkswagen Aktiengesellschaft, 38436 Wolfsburg (DE)
(72) Erfinder: Gevers, Dennis, 38106 Braunschweig (DE); Sinnhuber, Ruprecht, Dipl.-Ing., 38518 Gifhorn (DE)

(56) Entgegenhaltungen:
- DE-A- 19 712 961
- PATENT ABSTRACTS OF JAPAN vol. 2000, no. 01, 31. Januar 2000 (2000-01-31) & JP 11 291948 A (HONDA MOTOR CO LTD), 26. Oktober 1999 (1999-10-26)
- PATENT ABSTRACTS OF JAPAN vol. 008, no. 120 (M-300), 6. Juni 1984 (1984-06-06) & JP 59 026370 A (NISSAN JIDOSHA KK), 10. Februar 1984 (1984-02-10)
- PATENT ABSTRACTS OF JAPAN vol. 008, no. 061 (M-284), 23. März 1984 (1984-03-23) & JP 58 211975 A (NISSAN JIDOSHA KK), 9. Dezember 1983 (1983-12-09)
- PATENT ABSTRACTS OF JAPAN vol. 1998, no. 14, 31. Dezember 1998 (1998-12-31) & JP 10 258774 A (NISSAN MOTOR CO LTD), 29. September 1998 (1998-09-29)

## Beschreibung

Die Erfindung betrifft eine Sicherheitseinrichtung an einem Fahrzeug zum Schutz von Fußgängern nach dem Oberbegriff des Anspruchs 1.

Es sind bereits eine Reihe von derartigen im Fronthaubenbereich von Fahrzeugen, insbesondere von Personenkraftfahrzeugen, vorgesehenen Sicherheitseinrichtungen bekannt, die bei einer Kollision des Fahrzeugs mit einem Fußgänger eine mögliche Beeinträchtigung des Fußgängers reduzieren sollen.

So ist beispielsweise aus der gattungsbildenden JP 58 211 975 eine Sicherheitseinrichtung an einem Fahrzeug zum Schutz von Fußgängern mit einer Scharnieranordnung bekannt, mit der eine Fronthaube verschwenkbar am Fahrzeug angelenkt ist, wobei die Scharnieranordnung ein fronthaubenseitiges und ein karosserieseitiges Scharnierteil umfasst, die in Fahrzeuglängsrichtung gesehen voneinander beabstandet und mittelbar über einen Verbindungsarm verbunden sind. Die Anbindung des Verbindungsarms an das fronthaubenseitige Scharnierteil erfolgt wiederum über einen Schwingenarm. Der Schwingenarm ist dabei sowohl mit dem fronthaubenseitigen Scharnierteil als auch mit dem Verbindungsarmende über jeweils gleich ausgebildete Lagersteilen verbunden, die in einer Grund- bzw. Ausgangsstellung als feste Verbindung ausgebildet sind. Bei einer Kraftbeaufschlagung des vorderen Haubenkantenbereichs wird auf die Fronthaube eine in der Fronthaubenebene nach hinten in Richtung Windschutzscheibe gerichtete Kraft aufgebracht, die den Verbindungsarm um sein karosserieseitiges Schwenklager rotieren lässt, so dass das dem fronthaubenseidgen Scharnierteil zugeordnete Lager des Schwingenarms bricht, damit die Fronthaube mit ihrem hinteren Haubenkantenende angehoben wird und sich weiter in Richtung Windschutzscheibe nach hinten bewegen kann. Dabei wird Energie durch Reibarbeit innerhalb der Lagerstelle des Schwingenarms am fronthaubenseitigen Scharnierteils abgebaut. Kommt es im weiteren Verlauf der Kollision zu einem Kopfaufprall auf das hintere Ende der Fronthaube, wird der Verbindungsarm entsprechend gegen den Uhrzeigersinn wieder zurückverschwenkt, wobei die dem Verbindungsart zugeordnete Lagerstelle des Schwingenanns bricht und in der zuvor beschriebenen Art und Weise ebenfalls durch Reibarbeit in der Lagerstelle Energie absorbiert werden soll.

Weiterhin ist aus der JP 009 031 5266 und der DE 197 10 417 A1 jeweils eine Sicherheitseinrichtung bekannt, bei der eine Fronthaube bei einer drohenden oder erfolgten Kollision mit einem Fußgänger aus einer Fronthauben-Ruheposition in eine dieser gegenüber angehobene Fronthauben-Aufprallposition angehoben wird. Dazu wird eine im hinteren Vorderwagenbereich angeordnete Scharnieranordnung der Fronthaube mittels einer Zylinder-Kolben-Einheit angehoben, wodurch die Fronthaube um eine horizontale Drehachse im Frontbereich des Fahrzeugs verschwenkt wird, so dass die Fronthaube im hinteren Vorderwagenbereich aus einer Fronthauben-Ruheposition in eine Fronthauben-Aufprallposition angehoben wird. Zwar wird dadurch der Abstand der deformierbaren und dabei energieabsorbierenden Fronthaube zu darunterliegenden, nicht deformierbaren Fahrzeugteilen, wie zum Beispiel einer Brennkraftmaschine, erhöht, so dass ein insgesamt größerer Verformungsweg zur Verfügung steht, nachteilig hierbei ist jedoch, dass keine Energieabsorption mit einer gezielten Kraft-/Weg-Kennung möglich ist. Dadurch kann auch kein bestimmtes Beschleunigungs-Zeit-Verhalten für den aufprallenden Fußgänger aufgrund der fehlenden gezielten Krafteinleitung und Kraftumleitung im Rahmen der Energieabsorption erzielt werden, wie dies für eine gezielte Energieabsorption erforderlich ist.

Ein ähnlicher Aufbau ist aus der FR-A 2 772 700 bekannt, bei dem bei einem Fußgängeraufprall die Fronthauben-Scharnieranordnung durch eine Federanordnung aus der Ruhestellung in die Aufprallposition angehoben wird. Ein Aufbau einer Sicherheitseinrichtung mit einer Federanordnung ist auch aus der DE 197 12 961 A1 bekannt, bei der die Scharnieranordnung als Viergelenksanordnung ausgebildet ist und ein schwenkbar gelagerter Scharnierträger im Falle der Kollision des Fahrzeugs mit einem Fußgänger über die Federanordnung nach oben verschwenkt werden kann. Zwar wird auch hier im Falle einer Kollision des Fahrzeugs mit einem Fußgänger der Abstand der Fronthaube zu den darunterliegenden Fahrzeugteilen erhöht, nachteilig ist jedoch auch hier, dass keine Energieabsorption mit einer gezielten Kraft-/Weg-Kennung möglich ist. Insbesondere durch die Federanordnung besteht dabei die Gefahr, dass die Fronthaube nach einem ersten Absenken wieder nach oben zurückfedert. Dadurch kann der Aufprall in unerwünschter Weise unkontrolliert ablaufen. Ein bestimmtes Beschleunigungs-Zeit-Verhalten für den aufprallenden Fußgänger kann somit auch hier nicht erzielt werden.

Eine weitere Sicherheitseinrichtung an einem Fahrzeug zum Schutz von Fußgängern mit einer Energieabsorptionsmöglichkeit ist aus der DE 28 41 315 A1 bekannt, die eine Scharnieranordnung umfasst, mittels der eine Fronthaube, vorzugsweise zu beiden Seiten eines Fahrzeugs sowie vorzugsweise in einem hinteren Vorderwagenbereich, verschwenkbar am Fahrzeug angelenkt ist, wobei die Scharnieranordnung ein fronthaubenseitiges Scharnierteil und ein karosserieseitiges Scharnierteil umfasst. Weiter umfasst diese Sicherheitseinrichtung ein Energieabsorptionselement zur gezielten Energieabsorption bei einem Fußgängeraufprall auf die Fronthaube.

Konkret ist hier eine Zylinder-Kolben-Einheit vorgesehen, über die bei einer sensierten Kollision des Fahrzeugs mit einem Fußgänger die Fronthaube angehoben wird. Das Energieabsorptionselement besteht aus in einer Umfangsnut des Kolbens angeordneten Kugeln, die bei einer durch den Aufschlag des Fußgängers auf die angehobene Fronthaube bewirkten Rückbewegung des Kolbens an einer konisch verlaufenden Auflauframpe des Kolbens auflaufen und eine Klemmung des Kolbens in dem Zylinder bewirken.

Eine Energieabsorption ist mit einem derartigen Aufbau nur schlecht oder unzuverlässig möglich, da die Kugeln einerseits den Kolbenhub bei einer Aufwärtsbewegung des Kolbens nicht behindern sollen, andererseits aber eine Abwärtsbewegung des Kolbens blockieren sollen, was technisch nur schwer zu realisieren ist. Es besteht hier die Gefahr, dass hier die Kugeln bei der Abwärtsbewegung des Kolbens nicht entlang der Auflauframpe auflaufen, so dass die Abwärtsbewegung des Kolbens im Zylinder nicht behindert und damit auch keine Energieabsorption erzielt wird.

Abschließen zeigt die JP 11 291 948 eine Schamieranordnung, bei der die beiden Schamierteile übereinander angeordnet sind und unmittelbar ohne Zwischenschaltung eines Verbindungsarmes miteinander verbunden sind.

Insgesamt sind derartige Sicherheitseinrichtungen daher als wenig geeignet für den praktischen Einsatz anzusehen.

Aufgabe der Erfindung ist es daher, eine Sicherheitseinrichtung an einem Fahrzeug zum Schutz von Fußgängern zu schaffen, die bei einem Fußgängeraufprall eine Energieabsorption mit gezielter Kraft-Weg-Kennung ermöglicht.

Diese Aufgabe wird gelöst mit den Merkmalen des Anspruchs 1.

Gemäß Anspruch 1 ist das karosserieseitige Scharnierteil und das fronthaubenseitige Scharnierteil in Fahrzeuglängsrichtung gesehen über einen Verbindungsarm voneinander beabstandet mittelbar verbunden und das Energieabsorptionselement als ein durch Stauchung und/oder Knicken und/oder Faltung deformierbares Deformationselement ausgebildet, wobei die Scharnieranordnung mit dem Deformationselement gekoppelt ist, so dass bei einem Fußgängeraufprall auf die Fronthaube das fronthaubenseitige Scharnierteil und damit die Fronthaube unter Energieabsorption relativ zur Fahrzeugkarosserie durch das Deformationselement gezielt nach unten absenkbar ist.

Durch das Vorsehen eines derartigen Deformationselementes, das bei einem Fußgängeraufprall auf die Fronthaube Energie absorbiert, ist eine Energieabsorption mit einer gezielten Kraft-/Weg-Kennung möglich. Mit einem derartigen Aufbau kann daher durch eine gezielte Krafteinleitung und eine gezielte Kraftumleitung im Falle eines Aufpralls ein bestimmtes Beschleunigungs-/Zeit-Verhalten des aufprallenden Fußgängers und damit eine kontrollierte Aufprallenergieabsorption erreicht werden. Insgesamt kann somit hier die Wucht eines Aufpralls gezielt und kontrolliert aufgefangen werden.

Die Möglichkeiten hinsichtlich Lage und Ausbildung des Deformationselementes in Verbindung mit der Scharnieranordnung sind vielfältig und nahezu unbeschränkt, wobei die weiter unten angeführten unterschiedlichen diesbezüglichen Möglichkeiten einzeln oder aber auch in geeigneten Kombinationen realisiert werden können. Damit ist ein derartiger Aufbau der Sicherheitseinrichtung insbesondere für eine Großserienfertigung, wie dies beim Automobilbau der Fall ist, geeignet, da hierdurch Sicherheitseinrichtungen herstellbar sind, die neben der Möglichkeit der gezielten Energieabsorption aufgrund der großen Variationsmöglichkeiten auch auf einfache und preiswerte Weise herstellbar und an unterschiedliche Fahrzeugtypen anpassbar sind.

Um bereits von vornherein einen ausreichenden Abstand als Deformationsabstand zwischen der Fronthaube und den darunterliegenden, nicht deformierbaren Fahrzeugteilen, wie zum Beispiel einer Brennkraftmaschine, zu schaffen, kann die Fronthaube in einer bevorzugten Ausführungsform in einer Fronthauben-Ruheposition beabstandet oberhalb einer Karosserieebene angeordnet sein. Dies hat den Vorteil, dass keine zusätzlichen Maßnahmen vorgesehen werden müssen, um die Fronthaube im hinteren Vorderwagenbereich aus der Fronthauben-Ruheposition in eine Fronthauben-Aufprallposition anzuheben.

Je nach Fahrzeugtyp kann es aber erforderlich sein, alternativ oder zusätzlich eine derartige Fronthaubenanhebung vorzusehen. Dazu kann im Fahrzeugfrontbereich eine Sensorvorrichtung zur Erfassung einer drohenden oder erfolgten Kollision mit einem Fußgänger angeordnet sein, wobei ein durch die Sensorvorrichtung aktivierbarer Energiespeicher zur Verstellung einer Fronthaube des Fahrzeugs aus der Fronthauben-Ruheposition in eine dieser gegenüber angehobene Fronthauben-Aufprallposition vorgesehen ist. Dadurch wird der Abstand der deformierbaren und dabei Energie absorbierenden Fronthaube zu den darunterliegenden, nicht deformierbaren Fahrzeugteilen erhöht, so dass ein insgesamt größerer Verformungsweg zur Verfügung steht.

Bevorzugt **sind** das fronthaubenseitige Scharnierteil und/oder das karosserieseitige Scharnierteil als Deformationselement ausgebildet. Vorteilhaft hierbei ist, dass das jeweilige Scharnierteil in einer Doppelfunktion auch als Deformationselement verwendbar ist. Dies führt zu einer erwünschten Bauteilreduzierung, so dass die Sicherheitseinrichtung insgesamt einfacher und schneller und damit auch preisgünstiger herstellbar ist. Des weiteren ermöglicht eine Sicherheitseinrichtung, bei dem das fronthaubenseitige und/oder das karosserieseitige Scharnierteil als Deformationselement ausgebildet ist, zudem auch eine günstige und vorteilhafte Energieabsorption mit einer gezielten Kraft-/Weg-Kennung, wobei eine gezielte Krafteinleitung in das jeweilige Scharnierteil als Deformationselement stattfindet.

**Die Erfindung sieht weiterhin vor**, dass das fronthaubenseitige Scharnierteil und das karosserieseitige Scharnierteil in Fahrzeuglängsrichtung gesehen voneinander beabstandet sind, vorzugsweise mit einem näher zur Fahrzeugfrontseite liegenden fronthaubenseitigen Scharnierteil. Das fronthaubenseitige Scharnierteil und das karosserieseitige Scharnierteil sind dabei über einen Verbindungsarm miteinander verbunden, wobei dieser Verbindungsarm vorzugsweise bogenförmig ausgebildet, das heißt konkav nach unten gewölbt ausgebildet ist. Dieser Verbindungsarm ist mit einen. Verbindungsarmende vorzugsweise fest mit dem fronthaübenseitigen Scharnierteil verbunden und mit dem vorzugsweise hinteren Verbindungsarmende gelenkig am karosserieseitigen Scharnierteil angelenkt.

**Weiterhin ist gemäß der Erfindung** das karosserieseitige und/oder das fronthaubenseitige Scharnierteil als Deformationselement, vorzugsweise als Blech-Deformationselement, ausgebildet. Dadurch wird erreicht, dass das karosserieseitig und/oder das fronthaubenseitige Scharnierteil als Deformationselement bei einem Fußgängeraufprall auf die Fronthaube unter gezielter Energieabsorption auf einfache Weise durch gezielte Stauchung und/oder Knicken und/oder Faltung aus einer undeformierten Normalstellung in eine deformierte Deformationsstellung überführbar ist. Ein derartiger Aufbau ist einfach und preiswert bei guter Funktionssicherheit, das heißt mit günstiger und vorteilhafter Energieabsorption mit einer gezielten Kraft-/Weg-Kennung.

In einer **weiteren** Ausführungsform mit einem Verbindungsarm zwischen dem fronthaubenseitigen und dem karosserieseitigen Scharnierteil umfasst das hintere Verbindungsarmende im Anbindungsbereich an das karosserieseitige Scharnierteil einen Führungszapfen, der in einer in etwas senkrecht ausgerichteten Führungskulisse des karosserieseitigen Scharnierteils geführt ist. Mit einem derartigen Aufbau der Sicherheitseinrichtung ist eine gezielte und sichere Führung der Fronthaube während der Absenkung zum Abfangen der Aufprallwucht möglich.

In einer besonders bevorzugten Ausführungsform wirkt der Verbindungsarm dabei mit einem Energiespeicher zusammen, der im aktivierten Zustand den Führungszapfen aus einer unteren Ausgangstellung in eine dieser gegenüber angehobene Position in der Führungskulisse anhebt, so dass der Verbindungsarm die Fronthaube aus der Fronthauben-Ruheposition in die Fronthauben-Aufprallposition anhebt.

Als Energiespeicher können beispielsweise durch die Sensorvorrichtung auslösbare Gassackeinrichtungen vorgesehen sein, die eine zusätzliche Dämpfung ermöglichen. Für eine gezielt geführte Anhebung der Fronthaube ist jedoch in einer bevorzugten Ausführungsform als Energiespeicher eine Zylinder-Kolben-Einheit vorgesehen. Eine derartige Zylinder-Kolben-Einheit umfasst eine Kolbenstange mit einem Kolben, der in einem Zylinder der Zylinder-Kolben-Einheit geführt ist. Die Aktivierung kann dabei zum Beispiel auf pyrotechnischem Wege erfolgen.

Grundsätzlich ist es möglich, den Zylinder mit dem Verbindungsarm zu koppeln und die Kolbenstange mit ihrem freien Ende an einer karosserieseitigen Anbindungsstelle festzulegen. Günstige geometrische Einbauverhältnisse ergeben sich jedoch dann, wenn die Kolbenstange der Zylinder-Kolben-Einheit mit ihrem freien Ende mit dem Verbindungsarm gekoppelt ist und der Zylinder an einer karosserieseitigen Anbindungsstelle angebunden ist. Der Zylinder kann dabei, je nach Einbausituation und gewünschter Ausführungsform fest an der karosserieseitigen Anbindungsstelle angeordnet sein oder aber auch schwenkbar angelenkt sein. Die Kopplung der Kolbenstange mit dem Verbindungsarm kann zum Beispiel über eine formschlüssige Aufnahmeverbindung erfolgen.

In einer ersten Ausführungsform kann die Anbindungsstelle als Deformationseiement ausgebildet sein, wobei die Zylinder-Kolben-Einheit bei einem Fußgängeraufprall auf die Fronthaube aufgrund einer Kolbenrücklaufsperre im ausgefahrenen Zustand mit ausgeschobener Kolbenstange nach unten absenkbar ist, so dass das Deformationselement aufgrund der Anbindung der Zylinder-Kolben-Einheit unter gezielter Energieabsorption aus einer undeformierten Normalstellung durch Stauchung und/oder Knicken und/oder Faltung in eine deformierte Deformationsstellung überführbar ist. Dabei ist die Fronthaube durch die Zwangsführung des Führungszapfens in der Führungskulisse gezielt nach unten absenkbar. Mit einem derartigen Aufbau der Sicherheitseinrichtung ergibt sich eine besonders vorteilhafte Energieabsorption aufgrund der gezielten Krafteinleitung und der gezielten Kraftumleitung, so dass auch eine gezielte Kraft-/Weg-Kennung erreicht wird.

Ähnliche Ergebnisse lassen sich auch mit einer alternativen Anordnung erzielen, bei der der Verbindungsarm vorzugsweise in einer mittleren und/oder dem fronthaubenseitigen Scharnierteil zugewandten Bereich des Verbindungselementes als Deformationselement in Form eine Sollknickstelle ausgebildet ist. Die Zylinder-Kolben-Einheit behält bei einem Fußgängeraufprall auf die Fronthaube durch eine Kolbenrücklaufsperre den ausgefahrenen Zustand mit ausgeschobener Kolbenstange bei, so dass bei einem Fußgängeraufprall auf die Fronthaube der Verbindungsarm im Bereich der Sollknickstelle unter gezielter Energieabsorption abknickt.

In einer weiteren alternativen Ausführungsform, die eine vorteilhafte Energieabsorption mit gezielter Kraft-/Weg-Kennung ermöglicht, gibt die Zylinder-Kolben-Einheit bei einem Fußgängeraufprall auf die Fronthaube in der Art eines Deformationselementes kraftbegrenzt nach, wobei vorzugsweise bei diesem kraftbegrenztem Nachgeben zum Beispiel Gas als Treibmittel ausgeblasen wird.

In einer weiteren besonders bevorzugten Ausführungsform ist der den Kotflügel bildende Karosseriebereich wenigstens im fronthaubennahen Kotflügelbereich als Deformationsteil ausgebildet, so dass dieser als Deformationsteil ausgebildete Karosseriebereich bei einem Fußgängeraufprall auf die Fronthaube unter gezielter Energieabsorption durch Stauchung und/oder Knicken und/oder Faltung aus einer undeformierten Normalstellung in eine deformierte Deformationsstellung überführbar ist. Mit einem derartigen Aufbau des fronthaubennahen Kotflügelbereichs als Deformationsteil wird erreicht, dass auch der an die Fronthaube angrenzende Bereich als Deformationsbereich zur Verfügung steht, so dass insgesamt ein großflächiger Aufprallbereich für eine gezielte Energieabsorption geschaffen wird. Dadurch lassen sich besonders vorteilhafte Ergebnisse hinsichtlich einer gezielten Kraft-/Weg-Kennung durch gezielte Krafteinleitung und gezielte Kraftumleitung im Rahmen der Energieabsorption erzielen.

Eine nicht vom Anspruch 1 umfasste Ausführungsform für einen besonders kompakten und damit insbesondere für beengte Einbausituationen geeigneten Aufbau schlägt vor, dass das fronthaubenseitige Scharnierteil und das karosserieseitige Scharnierteil übereinander liegend angeordnet sind und unmittelbar miteinander in einer Anlenkstelle verbunden sind. Insgesamt ergeben sich hier somit kleinbauende Schamieranordnungen.

Anhand einer Zeichnung wird die Erfindung nachfolgend näher erläutert.

Es zeigen:
- Fig. 1a-1b: jeweils eine schematische Seitenansicht und Vorderansicht einer ersten nicht vom Anspurch 1 umfassten Ausführungsform der Sicherheitseinrichtung vor und nach einem Fußgängeraufprall,
- Fig. 2a-2b: jeweils eine schematische Seitenansicht und Vorderansicht einer gemäß dem Anspruch 1 ersten Ausführungsform der Sicherheitseinrichtung vor und nach einem Fußgängeraufprall,
- Fig. 3a-3b: jeweils eine schematische Seitenansicht und Vorderansicht einer dritten zweiten Ausführungsform der Sicherheitseinrichtung vor und nach einem Fußgängeraufprall,
- Fig. 4a-4c: jeweils eine schematische Seitenansicht einer dritten Ausführungsform der Sicherheitseinrichtung vor und nach einem Fußgängeraufprall, und
- Fig. 5a-5c: jeweils eine schematische Seitenansicht und Vorderansicht einer fünften vierten Ausführungsform der Sicherheitseinrichtung vor und nach einem Fußgängeraufprall.

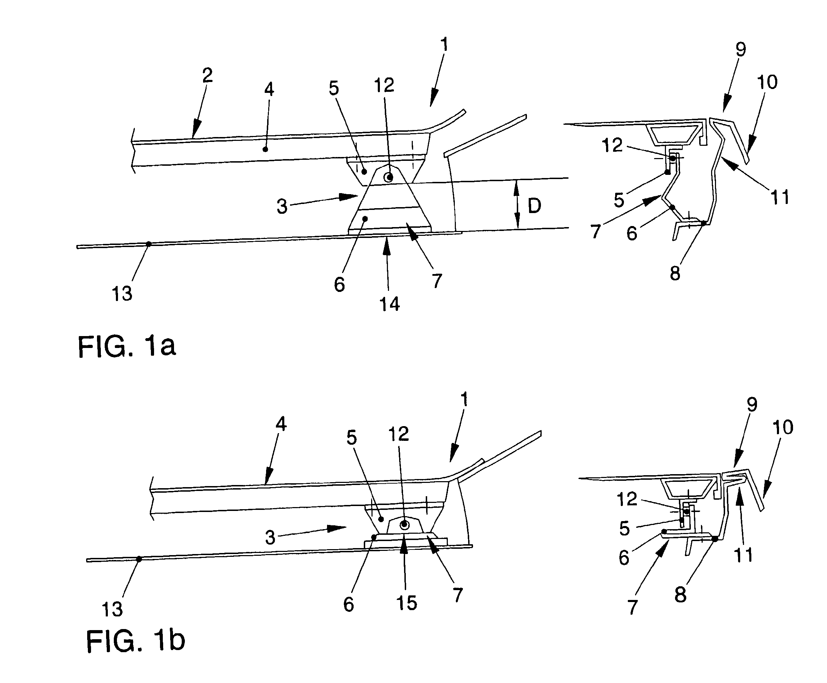

In der Fig. 1a ist schematisch eine Seitenansicht und eine Vorderansicht einer nicht vom Anspruch 1 umfassten Ausführungsform einer Sicherheitseinrichtung 1 in einer Fronthauben-Ruheposition 2 dargestellt. Diese Sicherheitseinrichtung 1 umfasst eine Scharnieranordnung 3 mittels der eine Fronthaube 4 verschwenkbar am Fahrzeug angelenkt ist. Die Fronthaube 4 ist vorzugsweise zu beiden Seiten des Fahrzeugs in einem hinteren Vorderwagenbereich angelenkt.

Wie dies aus der Fig. 1a weiter ersichtlich ist, besteht die Scharnieranordnung 3 aus einem fronthaubenseitigen Scharnierteil 5 und einem karosserieseitigen Scharnierteil 6, das in einer Doppelfunktion gleichzeitig als Deformationselement 7 ausgebildet ist.

Wie dies aus der Vorderansicht der Fig. 1a weiter ersichtlich ist, ist das karosserieseitige Scharnierteil 6 an einer Kotflügelbank 8 der Fahrzeugkarosserie 9 befestigt.

Aus der Fig. 1a ist weiter ersichtlich, dass der den Kotflügel 10 bildende Karosseriebereich im oberen fronthaubennahen Kotflügelbereich an dessen Innenseite als Deformationsteil 11 ausgebildet ist.

Aus der Seitenansicht der Fig. 1a ist weiter ersichtlich, dass das fronthaubenseitige Scharnierteil 5 und das karosserieseitige Scharnierteil 6 übereinanderliegend angeordnet sind und unmittelbar miteinander in einer Anlenkstelle 12 verbunden sind, wobei die Fronthaube 4 in der in der Fig. 1a dargestellten Fronthauben-Ruheposition 2 mit einem Deformationsabstand D gemessen zwischen dem fronthaubenseitigen Scharnierteil 5 und einer Karosserieebene 13 oberhalb der Karosserieebene 13 angeordnet ist, wobei der Deformatiohsabstand D vorzugsweise in etwa 80 mm beträgt.

Im Falle eines Fußgängeraufpralls auf die Fronthaube 4 wird, wie dies in der Fig. 1b schematisch in einer Vorderansicht und in einer Seitenansicht dargestellt ist, die Fronthaube 4 mitsamt dem fronthaubenseitigen Scharnierteil 5 unter gezielter Energieabsorption durch das als Deformationselement 7 ausgebildete karosserieseitige Scharnierteil 6 nach unten abgesenkt, wobei das Deformationselement 7 unter Stauchung und Faltung aus einer undeformierten Normalstellung 14 in eine deformierte Deformationsstellung 15 überführt wird. Dadurch ist eine Energieabsorption mit gezielter Kraft-/Weg-Kennung möglich, wobei durch eine gezielte Krafteinleitung und eine gezielte Kraftumleitung im Falle eines Aufpralls ein bestimmtes Beschleunigungszeitverhalten des aufprallenden Fußgängers und damit eine kontrollierte Aufprallenergieabsorption erreicht werden kann.

Wie aus der Fig. 1b weiter ersichtlich ist, wird im Falle eines Fußgängeraufpralls auf den Bereich der Fronthaube 4 gleichzeitig auch das Deförmationsteil 11 des Kotflügels 10 unter gezielter Energieabsorption gestaucht und zusammengefaltet.

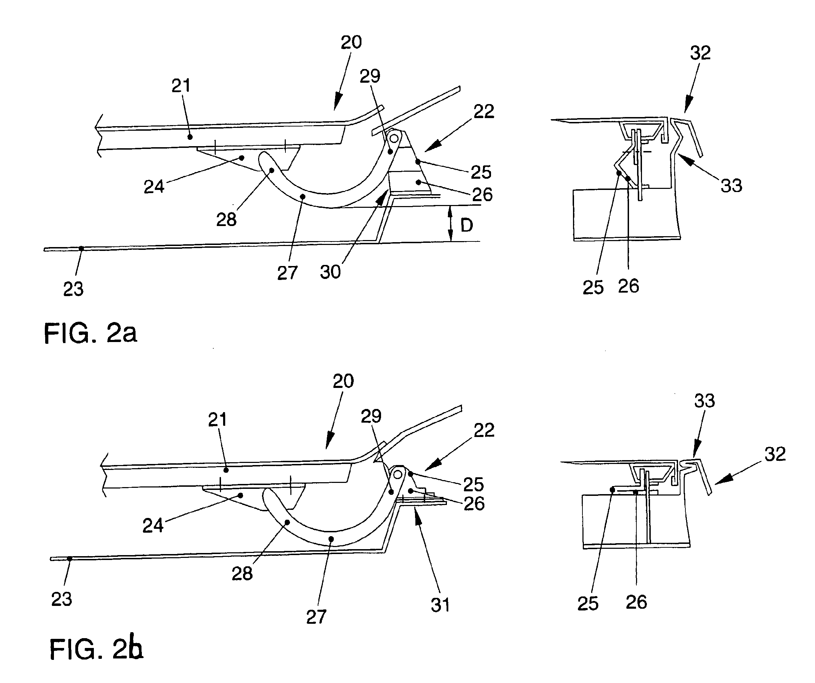

In der Fig. 2a ist eine gemäß dem Anspruch 1 erste Ausführungsform einer Sicherheitseinrichtung 20 dargestellt, bei der eine Fronthaube 21 mittels einer Scharnieranordnung 22 verschwenkbar am Fahrzeug angelenkt ist. Die Scharnieranordnung 22 umfasst auch hier wiederum ein fronthaubenseitiges Scharnierteil 24 und ein karosserieseitiges Scharnierteil 25, wobei das karosserieseitige Scharnierteil 25 hier gleichzeitig in einer Doppelfunktion auch als Deformationseiement 26, entsprechend dem Ausführungsbeispiel der Fig. 1a und 1b ausgebildet ist. Das fronthaubenseitige Scharnierteil 24 und das karosserieseitige Scharnierteil 25 sind in Fahrzeuglängsrichtung gesehen voneinander beabstandet, wobei das fronthaubenseitige Schamierteil. 24 näher zur Fahrzeugfrontseite hin angeordnet ist als das karosserieseitige Scharnierteil 25.

Wie dies aus der Fig. 2 weiter ersichtlich ist, sind das fronthaubenseitige Scharnierteil 24 und das karosserieseitige Scharnierteil 25 mittelbar über einen konkav nach unten gewölbten Verbindungsarm 27 verbunden, wobei dieser Verbindungsarm 27 mit einem fronthaubenseitigen Verbindungsarmende 28 fest mit dem fronthaubenseitigen Scharnierteil 24 verbunden ist und mit dem gegenüberliegenden karosserieseitigen Verbindungsarmende 29 gelenkig am karosserieseitigen Scharnierteil 25 angelenkt ist. Wie dies aus der Fig. 2a ferner ersichtlich ist, ist auch hier eine innere Seite eines Kotflügels 32 als Deformationsteil 33 ausgebildet.

Der Abstand zwischen einer Unterseite des Verbindungsarms 27 und einer Karosserieebene 23 beträgt hier zum Beispiel 80 mm.

Die Funktionsweise dieser Sicherheitseinrichtung 20 entspricht im wesentlichen derjenigen der Fig. 1a und 1b, wie dies nachfolgend anhand der Fig. 2b näher erläutert wird:

Bei einem Fußgängeraufprall auf die Fronthaube 21 wird diese unter gleichzeitiger Stauchung und Zusammenfaltung des als Deformationselement 26 ausgebildeten karosserieseitigen Scharnierteils 25 gezielt abgesenkt. Das Deformationselement 26 wird dabei unter Energieabsorption aus einer undeformierten Normalstellung 30 in eine deformierte Deformationsstellung 31 überführt.

Gleichzeitig kann auch hier, wie dies aus der Vorderansicht der Fig. 2b ersichtlich ist, bei einem Fußgängeraufprall gegebenenfalls entsprechend auch das Deformationsteil 33 des Kotflügels 32 unter gezielter Energieabsorption deformiert werden.

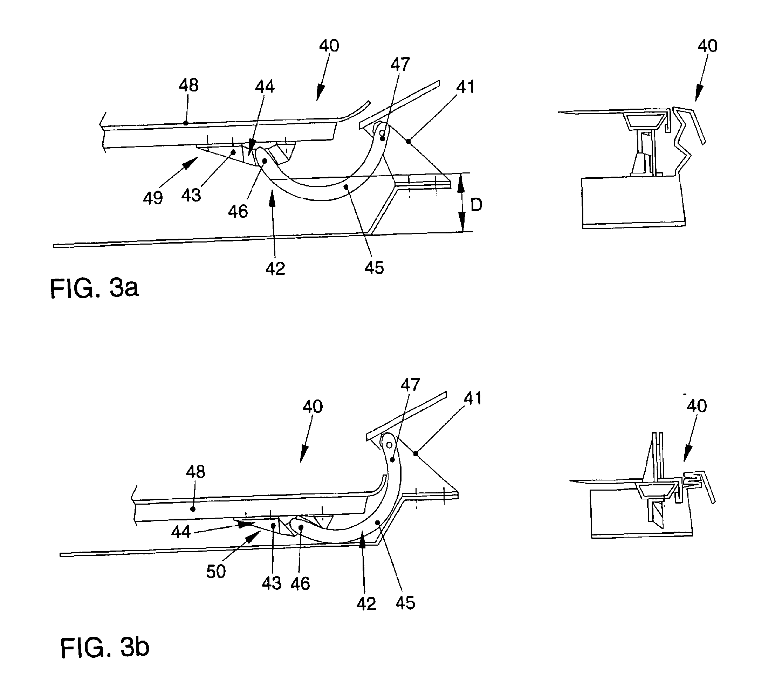

In der Fig. 3a ist eine **zweite** Ausführungsform einer Sicherheitseinrichtung 40 dargestellt, deren Aufbau grundsätzlich demjenigen der Sicherheitseinrichtung 20 der Fig. 2a und 2b entspricht, mit dem Unterschied, dass hier nicht ein karosserieseitiges Scharnierteil 41 einer Scharnieranordnung 42, sondern ein fronthaubenseitiges Scharnierteil 43 der Scharnieranordnung 42 als Deformationselement 44 ausgebildet ist.

Die Scharnieranordnung 42 umfasst hier wiederum einen Verbindungsarm 45, der mit einem fronthaubenseitigen Verbindungsarmende 46 fest mit dem fronthaubenseitigen Scharnierteil 43 verbunden ist und mit einem karosserieseitigen Verbindungsarmende 47 schwenkbar am karosserieseitigen Scharnierteil 41 angelenkt ist.

Wie dies insbesondere aus der Fig. 3b ersichtlich ist, wird bei einem Fußgängeraufprall und einer damit bewirkten Absenkung einer Fronthaube 48 das fronthaubenseitige Scharnierteil 43 als Deformationselement 44 unter gezielter Energieabsorption deformiert, wobei das Deformationselement 44 aus einer undeformierten Normalstellung in eine deformierte Deformationsstellung 50 überführt wird.

Die Anbindung des karosserieseitigen Verbindungsarmendes 47 am karosserieseitigen Scharnierteil 41 erfolgt dabei so, dass lediglich eine nach oben gerichtete, herkömmliche Öffnung der Fronthaube 48 möglich ist, jedoch eine weitere Absenkung der Fronthaube 48 aus der in der Fig. 3a dargestellten Fronthauben-Ruheposition 51 nur unter Krafteinwirkung, wie z. B. einem Fußgängeraufprall möglich ist. Auch hier ist die Fronthaube 48 mit einem ausreichenden Deformationsabstand D, vorzugsweise von in etwa 80 mm, oberhalb einer Karosserieebene 52 angeordnet.

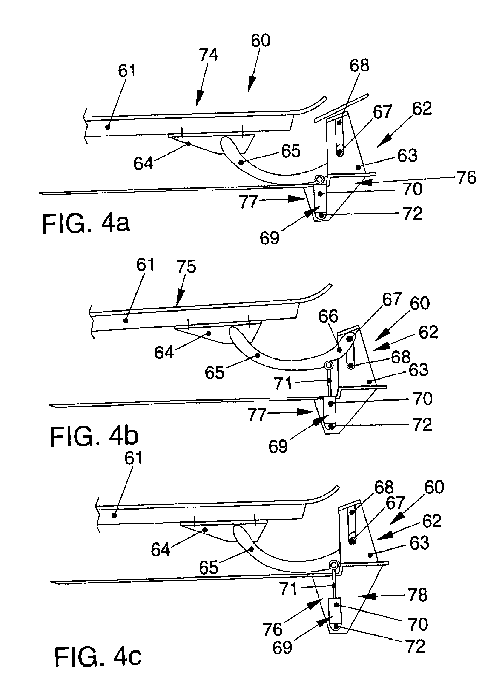

In der Fig. 4a ist eine vierte dritte Ausführungsform einer Sicherheitseinrichtung 60 in einer Seitenansicht schematisch dargestellt. Die Sicherheitseinrichtung 60 umfasst eine Fronthaube 61, die mittels einer Scharnieranordnung 62, bestehend aus einem karosserieseitigen Scharnierteil 63, einem fronthaubenseitigen Scharnierteil 64 und einem diese verbindenden Verbindungsarm 65 schwenkbar an einer Fahrzeugkarosserie angelenkt ist.

Wie dies aus der Fig. 4a weiter ersichtlich ist, umfasst ein hinteres Verbindungsarmende 66 im Anbindungsbereich des Verbindungsarms 65 an das karosserieseitige Scharnierteil 63 einen Führungszapfen 67, der in einer in etwa senkrecht ausgerichteten Führungskulisse 69 des karosserieseitigen Scharnierteils 63 geführt ist

Der Verbindungsarm 65 wirkt mit einer Zylinder-Kolben-Einheit 69 zusammen, die einen Zylinder 70 und eine Kolbenstange 71 mitsamt hier nicht sichtbaren Kolben umfasst. Die Kolbenstange 71 ist mit ihrem freien Ende mit dem Verbindungsarm 65 gekoppelt, während der Zylinder 70 an einer karosserieseitigen Anbindungsstelle 72, die in etwa im Bereich unterhalb des karosserieseitigen Scharnierteils 63 liegt, angebunden ist. Die Anbindungsstelle 72 ist hier als Deformationselement ausgebildet, zum Beispiel durch eine Blechfaltung.

Im Fahrzeugfrontbereich ist ferner eine Sensorvorrichtung zur Erfassung einer drohenden oder erfolgten Kollision mit einem Fußgänger angeordnet, was hier allerdings nicht dargestellt ist. Bei einer sensierten drohenden oder erfolgten Kollision mit einem Fußgänger aktiviert die Sensorvorrichtung die Zylinder-Kolben-Einheit 69, zum Beispiel durch pyrotechnische Zündung. Dadurch hebt der Verbindungsarm 65 über die ausgefahrene Kolbenstange 71 der Zylinder-Kolben-Einheit 69 die Fronthaube 61 aus einer in der Fig. 4a dargestellten Fronthauben-Ruheposition 74 in eine in der Fig. 4b dargestellte Fronthauben-Aufprallposition 75 an, wobei zudem der Führungszapfen 65 aus einer in der Fig. 4a dargestellten unteren Ausgangsstellung in eine dieser gegenüber angehobene Position in der Führungskulisse 68, wie dies in der Fig. 4b dargestellt ist, angehoben wird.

Die Funktionsweise der Sicherheitseinrichtung 60 wird nachfolgend anhand der Fig. 4c näher erläutert:

Bei einem Fußgängeraufprall auf die Fronthaube 61, die sich in der Fronthauben-Aufprallposition 75, wie diese in der Fig. 4b dargestellt ist, befindet, wird mittels einer Kolbenrücklaufsperre erreicht, das die Zylinder-Kolben-Einheit 69 im ausgefahrenen Zustand mit ausgeschobener Kolbenstange 71 nach unten abgesenkt wird, so dass das Deformationselement 76 aufgrund der Anbindung der Zylinder-Kolben-Einheit 69 unter gezielter Energieabsorption aus einer undeformierten Normalstellung 77 durch Auseinanderfaltung des Deformationselementes 76 in eine deformierte Deformationsstellung 78 überführt wird, wobei die Fronthaube 61 durch die Zwangsführung des Führungszapfens 67 in der Führungskulisse 68 bedingt gezielt und geführt nach unten abgesenkt werden kann.

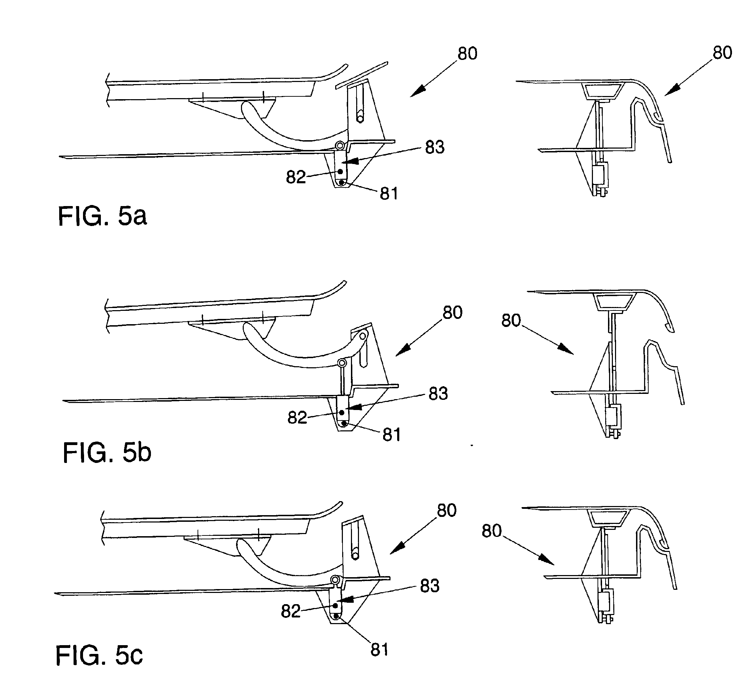

In den Fig. 5a bis 5c ist schematisch jeweils eine Seitenansicht und eine Vorderansicht einer **gemäß dem Anspruch 1 vierten** Ausführungsform einer Sicherheitseinrichtung 80 dargestellt, die vom Aufbau her im wesentlichen der Sicherheitseinrichtung 60 der Fig. 4a bis 4c entspricht, so dass hierauf nicht mehr detailliert eingegangen wird. Im Unterschied zu der Sicherheitseinrichtung 60 der Fig. 4a bis 4c ist hier eine Anbindungsstelle 81 eines Zylinders 82 einer Zylinder-Kolben-Einheit 83 nicht als Deformationselement ausgebildet, sondern erfolgt bei einem Fußgängeraufprall eine gezielte Energieabsorption durch kraftbegrenztes Nachgeben der Zylinder-Kolben-Einheit 83 als Deformationselement. Vorteilhaft wird dabei das Treibmittel der Zylinder-Kolben-Einheit, zum Beispiel ein Gas, während der Energieabsorption aus der Zylinder-Kolben-Einheit 83 ausgeblasen. Alternativ kann bei diesen Ausführungsformen die Fronthaube auch mit einer reversiblen Federanordnung angehoben werden, wobei die Energieabsorption dann z. B. durch die Zylinder-Kolben-Einheit erfolgt.

### BEZUGSZEICHENLISTE

- 1: Sicherheitseinrichtung
- 2: Fronthauben-Ruheposition
- 3: Scharnieranordnung
- 4: Fronthaube
- 5: fronthaubenseitiges Scharnierteil
- 6: karosserieseitiges Scharnierteil
- 7: Deformatiortselement
- 8: Kotflügelbank
- 9: Fahrzeugkarosserie
- 10: Kotflügel
- 11: Deformationsteil
- 12: Anlenkstelle
- 13: Karosserieebene
- 14: Normalstellung
- 15: Deformationsstellung
- 20: Sicherheitseinrichtung
- 21: Fronthaube
- 22: Scharnieranordnung
- 23: Karosserieebene
- 24: fronthaubenseitiges Scharnierteil
- 25: karosserieseitiges Scharnierteil
- 26: Deformationselement
- 27: Verbindungsarm
- 28: Verbindungsarmende
- 29: Verbindungsarmende (karosserieseitig)
- 30: Normalstellung
- 31: Deformationsstellung
- 32: Kotflügel
- 33: Deformationsteil
- 40: Sicherheitseinrichtung
- 41: karosserieseitiges Scharnierteil
- 42: Scharnieranordnung
- 43: fronthaubenseitiges Scharnierteil
- 44: Deformationselement
- 45: Verbindungsarm
- 46: fronthaubenseitiges Verbindungsarmende
- 47: karosserieseitiges Verbindungsarmende
- 48: Fronthaube
- 49: Normalstellung
- 50: Deformationsstellung
- 51: Fronthauben-Ruheposition
- 52: Karosserieebene
- 60: Sicherheitseinrichtung
- 61: Fronthaube
- 62: Scharnieranordnung
- 63: karosserieseitiges Scharnierteil
- 64: fronthaubenseitiges Scharnierteils
- 65: Verbindungsarm
- 66: hinteres Verbindungsarmende
- 67: Führungszapfen
- 68: Führungskulisse
- 69: Zylinder-Kolben-Einheit
- 70: Zylinder
- 71: Kolbenstange
- 72: Anbindungsstelle
- 74: Fronthauben-Ruheposition
- 75: Fronthauben-Aufprallposition
- 76: Deformationselement
- 77: Normalstellung
- 78: Deformationsstellung
- 80: Sicherheitseinrichtung
- 81: Anbindungsstelle
- 82: Zylinder
- 83: Zylinder-Kolben-Einheit
- D: Deformationsabstand

## Patentansprüche

1. Sicherheitseinrichtung an einem Fahrzeug zum Schutz von Fußgängern, mit einer Scharnieranordnung (22; 42; 62), mittels der eine Fronthaube (21; 48; 61) verschwenkbar am Fahrzeug angelenkt ist, wobei die Scharnieranordnung (22; 42; 62) ein fronthaubenseitiges Scharnierteil(24; 43; 64) und ein karosserieseitiges Scharnierteil (25; 41; 63) umfasst, wobei das fronthaubenseitige Scharnierteil (24; 43; 64) und das karosserieseitige Scharnierteil (25; 41; 63) in Fahrzeuglängsrichtung gesehen voneinander beabstandet mittelbar über einen Verbindungsarm (27; 45; 65) verbunden sind, **dadurch gekennzeichnet, dass** der mittels seiner Verbindungsarmenden (28; 29; 46; 47; 66) mit dem jeweils zugeordneten fronthaubenseitigen und karosserieseitigen Scharnierteil (24, 25; 41, 43; 63, 64) verbundene Verbindungsarm (27; 45; 65) mit einem durch Stauchung und/oder Knicken und/oder Faltung deformierbaren Deformationselement (26; 44; 76) gekoppelt ist dergestalt, dass auf die Fronthaube (21; 48; 61) bei einem Fußgängeraufprall diese mitsamt dem fronthaubenseitigen Scharnierteil (24; 43; 64) relativ zur Fahrzeugkarosserie unter Energieabsorption durch Deformation des Deformationselementes (26; 44; 76) gezielt nach unten abgesenkt wird.

2. Sicherheitseinrichtung nach Anspruch 1, **dadurch gekennzeichnet, dass** die Fronthaube (26; 44) in einer Fronthauben-Ruheposition (51) mit einem Deformationsabstand beabstandet oberhalb einer Karosserieebene (23; 52) angeordnet ist

3. Sicherheitseinrichtung nach Anspruch 1 oder 2, **dadurch gekennzeichnet, dass** im Fahrzeugfrontbereich eine Sensorvorrichtung zur Erfassung einer drohenden oder erfolgten Kollision mit einem Fußgänger angeordnet ist, und dass ein durch die Sensorvorrichtung aktivierbarer Energiespeicher (69; 83) zur Verstellung einer Fronthaube (61) des Fahrzeugs aus einer Fronthauben-Ruheposition (74) in eine dieser gegenüber angehobene Fronthauben-Aufprallposition (75) vorgesehen ist.

4. Sicherheitseinrichtung nach einem der Ansprüche 1 bis 3, **dadurch gekennzeichnet, dass** das fronthaubenseitige Scharnierteil (43) und/oder das karosserieseitige Scharnierteil (6; 25) als Deformationselement (7; 26; 44) ausgebildet ist.

5. Sicherheitseinrichtung nach einem der Ansprüche 1 bis 4, **dadurch gekennzeichnet, dass** der Verbindungsarm (27; 45; 65) mit einem Verbindungsarmende (28; 46) fest mit dem fronthaubenseitigen Scharnierteil (24; 43; 64) verbunden ist und mit dem anderen Verbindungsarmende (29; 47; 66) gelenkig am karosserieseitigen Scharnierteil (25; 41; 63) angelenkt ist.

6. Sicherheitseinrichtung nach Anspruch 5, **dadurch gekennzeichnet, dass** das hintere Verbindungsarmende (66) im Anbindungsbereich an das karosserieseitige Scharnierteil (63) einen Führungszapfen (67) umfasst, der in einer in etwa senkrecht ausgerichteten Führungskulisse (68) des karosserieseitigen Scharnierteils (63) geführt ist.

7. Sicherheitseinrichtung nach Anspruch 6, **dadurch gekennzeichnet, dass** der Verbindungsarm (65) mit einem Energiespeicher (69; 83) zusammenwirkt, der im aktivierten Zustand den Führungszapfen (67) aus einer unteren Ausgangsstellung in eine dieser gegenüber angehobene Position in der Führungskulisse (68) anhebt, so dass der Verbindungsarm (65) die Fronthaube (61) aus der Fronthauben-Ruheposition (74) in die Fronthauben-Aufprallposition (75) anhebt.

8. Sicherheitseinrichtung nach Anspruch 7, **dadurch gekennzeichnet, dass** der Energiespeicher eine Zylinder-Kolben-Einheit (69; 83) mit einem Zylinder (70; 82) und darin geführtem Kolben samt Kolbenstange (71) ist.

9. Sicherheitseinrichtung nach Anspruch 8, **dadurch gekennzeichnet, dass** die Kolbenstange (71) mit ihrem freien Ende mit dem Verbindungsarm (65) gekoppelt ist, und dass der Zylinder (70; 82) an einer karosserieseitigen Anbindungsstelle (72; 81) unterhalb des karosserieseitigen Scharnierteils (63) anbindbar ist.

10. Sicherheitseinrichtung nach Anspruch 9, **dadurch gekennzeichnet, dass** die Anbindungsstelle (72) als Deformationselement (76) ausgebildet ist, und dass die Zylinder-Kolben-Einheit (69) bei einem Fußgängeraufprall auf die Fronthaube (61) aufgrund einer Kolbenrücklaufsperre im ausgefahrenen Zustand mit ausgeschobener Kolbenstange (71) nach unten absenkbar ist dergestalt, dass das Deformationselement (76) aufgrund der Anbindung der Zylinder-Kolben-Einheit (69) unter gezielter Energieabsorption aus einer undeformierten Normalstellung (77) durch Stauchung und/oder Knicken und/oder Faltung in eine deformierte Deformationsstellung (78) überführbar ist sowie die Fronthaube (61) durch die Zwangsführung des Führungszapfens (67) in der Führungskulisse (68) gezielt nach unten absenkbar ist.

11. Sicherheitseinrichtung nach Anspruch 9, **dadurch gekennzeichnet, dass** der Verbindungsarm vorzugsweise in einem mittleren und/oder dem fronthaubenseitigen Scharnierteil zugewandten Bereich des Verbindungsarms als Deformationselement in Form einer Sollknickstelle ausgebildet ist, und dass die Zylinder-Kolben-Einheit bei einem Fußgängeraufprall auf die Fronthaube durch eine Kolbenrücklaufsperre den ausgefahrenen Zustand mit ausgeschobener Kolbenstange beibehält dergestalt, dass bei einem Fußgängeraufprall auf die Fronthaube der Verbindungsarm im Bereich der Sollknickstelle unter gezielter Energieabsorption abknickt.

12. Sicherheitseinrichtung nach einem der Ansprüche 1 bis 11, **dadurch gekennzeichnet, dass** der den Kotflügel (32) bildende Karosseriebereich wenigstens im oberen fronthaubennahen Kotflügelbereich als Deformationsteil (33) ausgebildet ist dergestalt, dass der als Deformationsteil (33) ausgebildete Karosseriebereich bei einem Fußgängeraufprall auf die Fronthaube (21; 48) unter gezielter Energieabsorption durch Stauchung und/oder Knicken und/oder Faltung aus einer undeformierten Normalstellung eine deformierte Deformationsstellung überführbar ist.

## Claims

1. Safety device on a vehicle for the protection of pedestrians, with a hinge arrangement (22; 42; 62) by means of which a bonnet (21; 48; 61) is coupled pivotably to the vehicle, the hinge arrangement (22; 42; 62) comprising a bonnet hinge part (24; 43; 64) and a body hinge part (25; 41; 63), the bonnet hinge part (24; 43; 64) and the body hinge part (25; 41; 63), which are spaced apart from each other, as seen in the longitudinal direction of the vehicle, being connected indirectly by a connecting arm (27; 45; 65), **characterized in that** the connecting arm (27; 45; 65), which is connected by means of its connecting arm ends (28; 29; 46; 47; 66) to the respectively assigned bonnet and body hinge parts (24, 25; 41, 43; 63, 64), is coupled in such a manner to a deformation element (26; 44; 76), which is deformable by compression and/or buckling and/or folding, that, in the event of a pedestrian impact against the bonnet (21; 48; 61), the latter together with the bonnet hinge part (24; 43; 64) is lowered downwards in a specific manner relative to the vehicle body with energy being absorbed by deformation of the deformation element (26; 44; 76).

2. Safety device according to Claim 1, **characterized in that** the bonnet (26; 44) is arranged in a bonnet rest position (51) spaced apart with a deformation distance above a body plane (23; 52).

3. Safety device according to Claim 1 or 2, **characterized in that** a sensor device for detecting an imminent collision, or a collision which has taken place, with a pedestrian is arranged in the front region of the vehicle, and **in that** an energy accumulator (69; 83), which can be activated by the sensor device, is provided for displacing a bonnet (61) of the vehicle from a bonnet rest position (74) into a bonnet impact position (75) which is raised in relation to the latter.

4. Safety device according to one of Claims 1 to 3, **characterized in that** the bonnet hinge part (43) and/or the body hinge part (6; 25) is designed as a deformation element (7; 26; 44).

5. Safety device according to one of Claims 1 to 4, **characterized in that** the connecting arm (27; 45; 65) is connected fixedly to the bonnet hinge part (24; 43; 64) at one connecting arm end (28; 46) and is coupled to the body hinge part (25; 41; 63) in an articulated manner at the other connecting arm end (29; 47; 66).

6. Safety device according to Claim 5, **characterized in that**, in the connecting region to the body hinge part (63), the connecting arm end (66) comprises a guide pin (67) which is guided in an approximately vertically aligned guide slot (68) of the body hinge part (63).

7. Safety device according to Claim 6, **characterized in that** the connecting arm (65) interacts with an energy accumulator (69; 83) which, in the activated state, raises the guide pin (67) in the guide slot (68) from a lower starting position into a position raised in relation to the latter, so that the connecting arm (65) raises the bonnet (61) from the bonnet rest position (74) into the bonnet impact position (75).

8. Safety device according to Claim 7, **characterized in that** the energy accumulator is a cylinder-piston unit (69; 83) with a cylinder (70; 82) and a piston, which is guided therein, together with a piston rod (71) .

9. Safety device according to Claim 8, **characterized in that** the piston rod (71) is coupled at its free end to the connecting arm (65), and **in that** the cylinder (70; 82) can be connected to a body connecting point (72; 81) below the body hinge part (63).

10. Safety device according to Claim 9, **characterized in that** the connecting point (72) is designed as a deformation element (76), and **in that**, if a pedestrian impacts the bonnet (61), the cylinder-piston unit (69), owing to a piston return lock, can be lowered downwards in the extended state with the piston rod (71) pushed out, in such a manner that the deformation element (76), owing to the connection of the cylinder-piston unit (69), can be transferred, with specific absorption of energy, from an undeformed normal position (77) into a deformed deformation position (78) by compression and/or buckling and/or folding, and the bonnet (61) can be lowered downwards in a specific manner by the constrained guidance of the guide pin (67) in the guide slot (68).

11. Safety device according to Claim 9, **characterized in that** the connecting arm, preferably in a central region of the connecting arm and/or a region facing the bonnet hinge part, is designed as a deformation element in the form of a predetermined buckling point, and **in that**, when a pedestrian impacts against the bonnet, the piston return lock enables the cylinder-piston unit to retain the extended state with the piston rod pushed out, in such a manner that, when a pedestrian impacts against the bonnet, the connecting arm buckles in the region of the predetermined buckling point with energy being absorbed in a specific manner.

12. Safety device according to one of Claims 1 to 11, **characterized in that** the body region forming the wing (32) is designed, at least in the upper wing region near the bonnet, as a deformation part (33) in such a manner that, when a pedestrian impacts against the bonnet (21; 48), the body region designed as a deformation part (33) can be transferred from an undeformed normal position into a deformed deformation position by compression and/or buckling and/or folding with energy being absorbed in a specific manner.

## Revendications

1. Dispositif de sécurité sur un véhicule pour protéger les piétons, comprenant un arrangement de charnière (22 ; 42 ; 62) au moyen duquel un capot avant (21 ; 48 ; 61) est articulé au véhicule de manière à pouvoir pivoter, l'arrangement de charnière (22 ; 42 ; 62) comprenant une partie charnière côté capot avant (24 ; 43 ; 64) et une partie charnière côté carrosserie (25 ; 41 ; 63), la partie charnière côté capot avant (24 ; 43 ; 64) et la partie charnière côté carrosserie (25 ; 41 ; 63), vues dans le sens longitudinal du véhicule, étant espacées l'une de l'autre et reliées indirectement par le biais d'un bras de liaison (27 ; 45 ; 65), **caractérisé en ce que** le bras de liaison (27; 45; 65) relié au moyen de ses extrémités de bras de liaison (28 ; 29 ; 46 ; 47 ; 66) avec la partie de charnière côté capot avant et côté carrosserie (24, 25 ; 41, 43 ; 63, 64) qui lui est à chaque fois associée est accouplé avec un élément de déformation (26 ; 44 ; 76) pouvant être déformé par refoulement et/ou par flambage et/ou par pliage de telle sorte que le capot avant (21 ; 48 ; 61), en cas de collision avec un piéton, est abaissé de manière ciblée vers le bas en même temps que la partie charnière côté capot avant (24 ; 43 ; 64) par rapport à la carrosserie du véhicule en absorbant l'énergie par déformation de l'élément de déformation (26 ; 44 ; 76).

2. Dispositif de sécurité selon la revendication 1, **caractérisé en ce que** le capot avant (26 ; 44) dans une position de repos du capot avant (51) est disposé espacé d'un écart de déformation au-dessus d'un plan de carrosserie (23 ; 52).

3. Dispositif de sécurité selon la revendication 1 ou 2, **caractérisé en ce que** dans la zone frontale du véhicule est disposé un dispositif de détection pour détecter une collision imminente ou ayant eu lieu avec un piéton et qu'il est prévu un accumulateur d'énergie (69 ; 83) pouvant être activé par le dispositif de détection pour positionner un capot avant (61) du véhicule d'une position de repos du capot avant (74) en une position de collision du capot avant (75) surélevée par rapport à celle-ci.

4. Dispositif de sécurité selon l'une des revendications 1 à 3, **caractérisé en ce que** la partie de charnière côté capot avant (43) et/ou la partie de charnière côté carrosserie (6 ; 25) est réalisée sous la forme d'un élément de déformation (7 ; 26 ; 44).

5. Dispositif de sécurité selon l'une des revendications 1 à 4, **caractérisé en ce que** le bras de liaison (27 ; 45 ; 65) est relié à demeure par une extrémité de bras de liaison (28 ; 46) avec la partie de charnière côté capot avant (24 ; 43 ; 64) et par l'autre extrémité de bras de liaison (29 ; 47 ; 66) de manière articulée avec la partie de charnière côté carrosserie (25 ; 41.; 63).

6. Dispositif de sécurité selon la revendication 5, **caractérisé en ce que** l'extrémité arrière de bras de liaison (66) comprend dans la zone de liaison avec la partie de charnière côté carrosserie (63) un tenon de guidage (67) qui est guidé dans une coulisse de guidage (68) dirigée à peu près verticalement de la partie de charnière côté carrosserie (63).

7. Dispositif de sécurité selon la revendication 6, **caractérisé en ce que** le bras de liaison (65) agit conjointement avec un accumulateur d'énergie (69 ; 83) qui, en position active, soulève le tenon de guidage (67) dans la coulisse de guidage (68) d'une position initiale en bas vers une position relevée par rapport à celle-ci de manière à ce que le bras de liaison (65) soulève le capot avant (61) de la position de repos du capot avant (74) en la position de collision du capot avant (75).

8. Dispositif de sécurité selon la revendication 7, **caractérisé en ce que** l'accumulateur d'énergie est un ensemble cylindre/piston (69 ; 83) comprenant un cylindre (70 ; 82) et un piston avec sa bielle (71) guidé dans celui-ci.

9. Dispositif de sécurité selon la revendication 8, **caractérisé en ce que** la bielle (71) est accouplée au bras de liaison (65) avec son extrémité libre et que le cylindre (70 ; 82) peut être relié à un point d'attache côté carrosserie (72 ; 81) sous la partie de charnière côté carrosserie (63).

10. Dispositif de sécurité selon la revendication 9, **caractérisé en ce que** le point d'attache (72) est réalisé sous la forme d'un élément de déformation (76) et que l'ensemble cylindre/piston (69), en cas de collision avec un piéton sur le capot avant (61), du fait d'un dispositif antiretour du piston en position sortie avec la bielle (71) sortie, peut être abaissé vers le bas de telle sorte que l'élément de déformation (76), du fait de la liaison de l'ensemble cylindre/piston (69), peut être amené, avec une absorption ciblée de l'énergie, d'une position normale non déformée (77) en une position de déformation déformée (78) par refoulement et/ou par flambage et/ou par pliage et le capot avant (61) peut être abaissé de manière ciblée vers le bas par le guidage forcé du tenon de guidage (67) dans la coulisse de guidage (68).

11. Dispositif de sécurité selon la revendication 9, **caractérisé en ce que** le bras de liaison est réalisé en tant qu'élément de déformation sous la forme d'un point de flambage voulu de préférence dans une zone du bras de liaison centrale et/ou faisant face à la partie de charnière côté capot avant et que l'ensemble cylindre/piston, en cas de collision avec un piéton sur le capot avant, conserve la position sortie avec la bielle sortie grâce à un dispositif antiretour du piston de telle sorte qu'en cas de collision avec un piéton sur le capot avant, le bras de liaison rompt en pliant dans la zone du point de flambage voulu avec absorption ciblée de l'énergie.

12. Dispositif de sécurité selon l'une des revendications 1 à 11, **caractérisé en ce que** la zone de la carrosserie qui forme les ailes (32) est réalisée au moins dans la zone supérieure proche du capot avant des ailes sous la forme d'une partie de déformation (33) de telle sorte que la zone de la carrosserie réalisée sous la forme d'une partie de déformation (33), en cas de collision avec un piéton sur le capot avant (21 ; 48) peut être amenée, avec une absorption ciblée de l'énergie, d'une position normale non déformée en une position de déformation déformée par refoulement et/ou par flambage et/ou par pliage.
